# FASCICULE DE BREVET EUROPEEN

(11) **EP 2 647 187 B1**
(45) Date de publication et mention de la délivrance du brevet: **16.11.2016**
(21) Numéro de dépôt: 11779730.8
(22) Date de dépôt: 26.09.2011
(51) Int. Cl.: H04M 3/487, H04M 3/42

(54) **PROCÉDÉ D'ENRICHISSEMENT D'UN MESSAGE VOCAL PAR INFORMATION COMPLÉMENTAIRE NON VOCALE**
VERFAHREN ZUR VERBESSERUNG EINER VOICEMAIL MIT ZUSÄTZLICHEN NICHTSPRACHLICHEN INFORMATIONEN
METHOD FOR ENHANCING A VOICEMAIL WITH ADDITIONAL NON-VOICE INFORMATION

(30) Priorité: 28.09.2010 FR 1003846
(43) Date de publication de la demande: 09.10.2013
(73) Titulaire: Paycool International Ltd., Hong Kong (CN)
(72) Inventeur: BARTHELEMY, Serge, F-84000 Montpellier (FR)
(74) Mandataire: Nicolle, Olivier
(86) Numéro de dépôt international: PCT/FR2011/000525
(87) Numéro de publication internationale: WO 2012/045922

(56) Documents cités:
- US-A- 5 590 184
- US-A1- 2002 072 906

## Description

### ETAT DE LA TECHNIQUE

La présente invention concerne un procédé pour l'enrichissement d'un message vocal par une information non vocale complémentaire, de préférence rémanente, et pour l'envoi d'un message vocal ainsi enrichi, au téléphone d'un destinataire.

Le développement de la téléphonie et notamment de la téléphonie mobile a permis d'offrir de nouveaux services de messagerie au-delà de la simple messagerie vocale.

Le message vocal d'un tel service de messagerie classique est un message préenregistré ou généré à l'aide d'un système de synthèse vocale et diffusé au destinataire lors d'un appel téléphonique. Une fois que le destinataire a décroché l'appel et écouté le message, celui-ci est en général perdu et il ne reste plus de trace du contenu de ce dernier.

Le SMS (« *Short Message Service » en terminologie anglo-saxonne*) permet d'envoyer un message texte uniquement d'une taille limitée généralement à 160 caractères par message. A la différence du simple message vocal, le message reçu par son destinataire est enregistré sur le téléphone mobile et peut être consulté à tout moment.

Pour pallier aux limitations du SMS, le MMS (« *MultiMedia Messaging Service » en terminologie anglo-saxonne)* a ensuite été proposé. Ce dernier permet de mettre à disposition du destinataire un message plus riche qu'un simple SMS sous forme d'un contenu multimédia. En pratique, on a constaté que le mode d'utilisation du MMS et les problèmes de compatibilité de certains téléphones font que le MMS n'a pas connu le succès escompté.

Le courriel que certains téléphones intelligents (dit des « smart phones » en terminologie anglo-saxonne) sont en mesure de gérer permet de recevoir sous forme de courrier électronique théoriquement tout type de contenu numérique.

On connaît par ailleurs, de par un document US 2002/072906 A1, un système qui permet la création et la gestion d'annonces d'accueil pour messagerie de téléphone, dans lequel un utilisateur d'un système téléphonique va pouvoir disposer de différents outils pour créer différents types d'annonce d'accueil pour sa messagerie et en gérer leur diffusion en fonction de paramètres dans un calendrier. Les annonces d'accueil sont destinées à être diffusées en réponse à des appels entrants lorsque le destinataire est indisponible pour prendre l'appel entrant. Mais les annonces ainsi créées sont fixes et dépendent uniquement des paramètres choisis par le destinataire des appels entrants. Ce document ne mentionne pas la création à la volée de messages vocaux créés spécifiquement pour des appels vers des destinataires variés en fonction du contexte de l'appel. Il ne décrit pas non plus l'émission d'appels sortants pour lesquels le numéro d'appelant serait substitué par une chaine de chiffres contenant une information complémentaire au contenu du message vocal.

Il existe bien entendu des circonstances où l'émission d'un simple message vocal est très bien adaptée au besoin tant de son émetteur que de son destinataire. Mais dans d'autres circonstances, il pêche par le fait de ne pas pouvoir communiquer simultanément au destinataire une autre information succincte, complémentaire avec le contenu du message vocal, et de préférence rémanente.

Le document US 5 590 184 A décrit le remplacement du contenu d'un numéro appelant, destiné à être affiché sur le terminal du destinataire d'un appel, par un autre numéro, fonctionnel mais non attribué, de façon à permettre au destinataire de l'appel de contacter l'appelant tout en permettant à celui-ci de rester anonyme.

Dans ce genre de circonstances, le problème technique à résoudre consiste alors à transmettre au destinataire d'un appel vocal par téléphone, une information supplémentaire, non contenue dans le message vocal lui-même et complémentaire par rapport à lui. Cette information sera de préférence rémanente, afin que le destinataire puisse s'y reporter et l'exploiter par la suite. Bien entendu, la solution à ce problème technique ne devra pas reproduire les inconvénients de coût ou de lourdeur évoqués par rapport aux techniques connues citées plus haut.

Il peut aussi être nécessaire que l'information complémentaire à véhiculer avec le message vocal soit confidentielle ou qu'elle doive n'être interprétable que par le destinataire du message vocal.

Pour parvenir à communiquer une information complémentaire associée à un message vocal, il est alors nécessaire de communiquer celle-ci par un autre canal que le canal vocal, comme le SMS, le MMS voire un courriel. Ceci s'avère non seulement lourd, coûteux (le coût de l'appel plus le coût d'un SMS), et peu pratique voire déroutant pour l'utilisateur.

### BUT DE L'INVENTION

La présente invention a par conséquent pour but général d'apporter une solution aux limitations liées à la simple diffusion d'un message vocal par téléphone et de permettre à l'utilisateur de disposer simultanément à la diffusion du message vocal, d'une information complémentaire non vocale, succincte et de préférence rémanente, de sorte qu'elle restera disponible et pourra être utilisée après l'écoute du message par son destinataire.

Un autre but de l'invention est de proposer une méthode qui assure la confidentialité de l'information complémentaire véhiculée avec le message vocal.

Un autre but de l'invention est de proposer une méthode d'utilisation interactive de l'information complémentaire véhiculée avec le message vocal.

Afin d'assurer une meilleure clarté de la description qui s'ensuit de l'invention, il est utile d'introduire un certain nombre de définitions des principaux éléments qui participent à la mise en oeuvre du procédé.

**Service Émetteur :** il s'agit d'une entité telle qu'une entreprise, un département d'une entreprise, une association, un service public, etc., qui souhaite envoyer des Messages Vocaux Enrichis à ses clients, adhérents, utilisateurs, abonnés ou plus généralement à toute personne disposant d'un téléphone mobile ou non et ici appelée un Destinataire. Le Service Émetteur dispose de moyens informatiques et de communication adaptés à l'envoi de demandes d'émissions de messages vocaux à un Serveur d'Appels et à la réception en retour des confirmations ou de toutes informations relatives à ces messages.

**Message Vocal Enrichi :** Il s'agit d'un message vocal demandé par le Service Émetteur, assemblé ou construit par un Serveur d'Appels, envoyé par ce dernier via un appel du Téléphone d'un Destinataire et véhiculant simultanément un message vocal et une Information Complémentaire, de préférence rémanente, insérée dans le Numéro Appelant.

**Serveur d'Appels :** il s'agit d'un serveur informatique disposant :
- de capacités de connexions avec un ou plusieurs Services Émetteurs,
- de capacités de gestion et de traitements de données,
- de connexions avec un ou plusieurs réseaux de téléphonie vocale. Avantageusement le Serveur d'Appels disposera de plusieurs lignes téléphoniques fournies par les principaux opérateurs du pays de manière à pouvoir choisir la ligne la mieux appropriée pour émettre un appel vers un abonné chez un opérateur particulier.
- d'un programme mettant en oeuvre un algorithme capable de réaliser, sur sollicitation d'un Service Émetteur, la construction ou l'assemblage d'un Message Vocal Enrichi et de déclencher un appel vers le Téléphone d'un Destinataire.

Le Serveur d'Appels au sens de l'invention peut être opéré soit par le Service Émetteur soit par une entité indépendante du Service Émetteur.

**Information Complémentaire :** il s'agit d'une information non vocale constituée d'une chaîne de caractères alphanumériques, ou même simplement numériques, insérée dans le Numéro Appelant et de préférence rémanente, de façon à rester accessible par le Destinataire après la réception d'un message vocal, notamment en figurant dans la liste des appels reçus du Téléphone de ce dernier.

**Numéro Appelant :** il s'agit d'une chaîne de caractères généralement numériques, qui apparait sur l'afficheur d'un Téléphone pour indiquer l'origine d'un appel, il est aussi très souvent appelé « Caller ID » dans les documents internationaux.

**Destinataire :** toute personne disposant d'un Téléphone.

**Téléphone :** téléphone mobile ou fixe doté au moins d'un afficheur apte à afficher les Numéros Appelants, ou tout appareil électronique susceptible de recevoir des appels téléphoniques et d'afficher les Numéros Appelants.

**Terminal Réseau :** ordinateur personnel, téléphone, ou tout autre type d'appareil électronique disposant au moins d'un écran et apte à se connecter à un réseau numérique, par exemple internet, pour accéder à des sites en ligne et interagir avec lesdits sites.

Dans certains cas il peut arriver que le Téléphone et le Terminal Réseau soient confondus en un même appareil.

Dans la suite de la description de l'invention, les termes ou expressions précédemment définis seront utilisés avec des Majuscules chaque fois qu'ils seront utilisés avec la signification telle que définie.

### OBJET DE L'INVENTION

Les buts visés ci-dessus sont atteints par le procédé selon l'invention.

Afin de résoudre le problème posé, l'invention propose un procédé de création et de transmission d'un appel téléphonique sollicité par un Service Émetteur vers le Téléphone d'un Destinataire, dans lequel un serveur du Service Émetteur est apte à présenter auprès d'un Serveur d'Appels une requête d'appel contenant des informations numériques permettant au Serveur d'Appels de déclencher un appel vers le Téléphone du Destinataire à partir d'un Numéro Appelant destiné à s'afficher sur ledit Téléphone, caractérisé en ce que ledit appel contient un Message Vocal Enrichi, constitué d'une part par un message vocal construit par le Serveur d'Appels à partir d'une partie des informations contenues dans ladite requête d'appel et destiné à être diffusé lors dudit appel, et d'autre part par une Information Complémentaire non vocale, contenue dans ladite requête d'appel et utilisée par le Serveur d'Appels pour constituer ledit Numéro Appelant.

De cette manière, il devient possible de communiquer au Destinataire une information quelconque transmise simplement et économiquement par l'intermédiaire d'un message vocal, enrichi par une Information Complémentaire contenue dans le numéro appelant lui-même, que l'Utilisateur voit s'afficher sur son téléphone et qui peut être conservée de façon rémanente dans la liste des appels entrants.

Selon l'invention, ladite Information Complémentaire est constituée par une chaine de caractères alphanumériques ou le plus souvent simplement numériques insérée par le Serveur d'Appels dans ledit Numéro Appelant destiné à s'afficher sur le Téléphone du Destinataire de l'appel à réception de celui-ci, et ledit message vocal indique au Destinataire la nature et l'utilisation de ladite Information Complémentaire.

Bien entendu, la nature et l'usage précis de l'Information Complémentaire dépendra du contexte applicatif du procédé selon l'invention, et n'est pas limitative de la présente invention.

Selon l'invention, plusieurs modes de transmission sont possibles pour communiquer la signification de l'Information Complémentaire au Destinataire.

Selon un premier mode de transmission, la signification de ladite Information Complémentaire est communiquée au Destinataire uniquement et intégralement au moyen dudit message vocal.

Selon un autre mode de transmission, la signification de ladite information Complémentaire est communiquée au Destinataire en partie au moyen dudit message vocal, et en partie par un moyen indépendant du message vocal.

Alternativement, il est aussi possible de faire en sorte que la signification de ladite Information Complémentaire soit indiquée en totalité par un moyen indépendant du message vocal. Par exemple, il peut être avantageux que la signification de ladite Information Complémentaire soit intégralement indiquée dans une page web d'un site transactionnel auquel le Destinataire est par ailleurs connecté au moyen d'un Terminal Réseau, comme par exemple l'affichage sur le site en ligne du Service Émetteur ou autre.

De préférence, ladite Information Complémentaire est rémanente dans le Téléphone du Destinataire de façon à pouvoir être consultée par celui-ci à la demande. Elle peut aussi avoir une validité limitée dans le temps, auquel cas il est utilise que cette durée de validité soit indiquée dans ledit message vocal.

Selon un mode de réalisation du procédé selon l'invention, pour enrichir le message vocal avec une Information Complémentaire, le procédé comporte les étapes suivantes :
- construction par un programme au niveau du serveur du Service Emetteur d'un fichier de requête d'appel indiquant un ensemble de paramètres pour la synthèse du Message Vocal Enrichi;
- transmission dudit fichier de requête d'appel audit Serveur d'Appels;
- à réception dudit fichier par le Serveur d'Appels, lancement par celui-ci d'un programme de traitement apte à construire un Numéro Appelant incorporant ladite Information Complémentaire et à transmettre au Téléphone du Destinataire ledit message vocal en provoquant l'affichage dudit Numéro Appelant sur le Téléphone du Destinataire.

Selon l'invention, le fichier de requête comporte au moins le texte d'un message vocal destiné au Destinataire sous la forme d'un ou plusieurs fichiers de texte (T1, ... Tm) ou le fichier audio lui-même, le numéro de Téléphone du Destinataire, et l'Information Complémentaire destinée au Destinataire, et la signification de l'Information Complémentaire dans les cas où celle-ci est prévue pour être communiquée partiellement ou intégralement au Destinataire via son Téléphone.

Mais il peut être utile que ledit fichier de requête comporte en outre un ou plusieurs des éléments suivants : le nom du Destinataire, un type de voix à utiliser pour la génération du Message Vocal Enrichi à partir du fichier de requête, ce type de voix étant choisi parmi plusieurs types de voix disponibles (V1,..., Vn), une instruction de séquencement définissant l'ordre dans lequel les éléments du fichier de requête doivent être assemblés, une instruction d'envoi définissant les paramètres d'envoi du Message Vocal Enrichi, et une date et heure limite de validité de l'Information Complémentaire incluse dans le Message Vocal Enrichi.

Le programme de traitement du fichier de requête opérant dans le Serveur d'Appels comporte une ou plusieurs des étapes consistant à :
- délivrer un accusé de réception du fichier de requête au Service Émetteur;
- convertir les fichiers texte du fichier de requête en fichiers vocaux, à l'aide d'un programme de synthèse vocale et en utilisant le type de voix indiqué dans le fichier de requête ;
- assembler dans l'ordre spécifié dans le fichier de requête les différents éléments vocaux qui vont constituer la partie vocale du message.
- assembler le code pays et l'information Complémentaire dans la position spécifiée dans le fichier de requête, avec un préfixe éventuel pour construire le Numéro Appelant associé au Message Vocal Enrichi spécifié;
- vérifier la disponibilité du Numéro Appelant, à savoir le fait que le Numéro Appelant ainsi constitué n'est pas un numéro de téléphone déjà attribué ou n'est pas attribué à un tiers autre que le Service Émetteur ;
- déclencher à partir du Serveur d'Appels un appel vers le numéro de téléphone du Destinataire depuis une ligne d'appel, et substituer au numéro de cette ligne le Numéro Appelant, de façon à provoquer l'affichage du Numéro Appelant sur le Téléphone du Destinataire ;
- envoyer par le Serveur d'Appels une confirmation au système du Service Émetteur, indiquant que l'appel vers le Destinataire correspondant à la requête a

bien été réalisé et que le décroché a bien été obtenu, avec la date et l'heure de réalisation.

L'invention a également pour objet un système pour la création et la transmission d'un message vocal à partir du serveur d'un Service Émetteur vers le Téléphone d'un Destinataire via un Serveur d'Appels, caractérisé en ce que le serveur comporte un programme apte à préparer une requête d'appel contenant un message vocal numérisé et à la transmettre au Serveur d'Appels, et en ce que le Serveur d'Appels comporte un programme apte à recevoir ladite requête d'appel et à construire un Message Vocal Enrichi comprenant d'une part une synthèse vocale dudit message vocal numérisé, et d'autre part une Information Complémentaire non vocale apte à âtre utilisée par le Serveur d'Appels pour constituer un Numéro Appelant destiné à s'afficher sur le Téléphone du Destinataire.

Avantageusement, dans ce système, la signification de ladite Information Complémentaire est contenue au moins partiellement dans ledit message vocal, mais il est également possible qu'elle soit totalement contenue dans ledit message vocal, ou au contraire signifiée en totalité au Destinataire par un autre moyen.

L'invention a enfin pour objet l'utilisation du procédé décrit pour la validation d'une transaction en ligne, cette utilisation étant caractérisée par le fait que ladite Information Complémentaire contient au moins une information représentative de ladite transaction en ligne (montant, destinataire), et un code de validation de ladite transaction en ligne.

### DESCRIPTION DETAILLEE DE L'INVENTION

L'invention sera mieux comprise en se référant à la description qui suit ainsi qu'aux figures ci-jointes, dans lesquelles :
- la figure 1 représente un schéma de principe d'un système apte à mettre en oeuvre le procédé selon l'invention ;
- la figure 2 représente un organigramme global du procédé selon l'invention, faisant apparaître l'ensemble des éléments du système mettant en oeuvre les différentes étapes, y compris le Téléphone du Destinataire, et pour certaines applications nécessitant l'accès à un réseau en ligne, le Terminal Réseau du Destinataire;

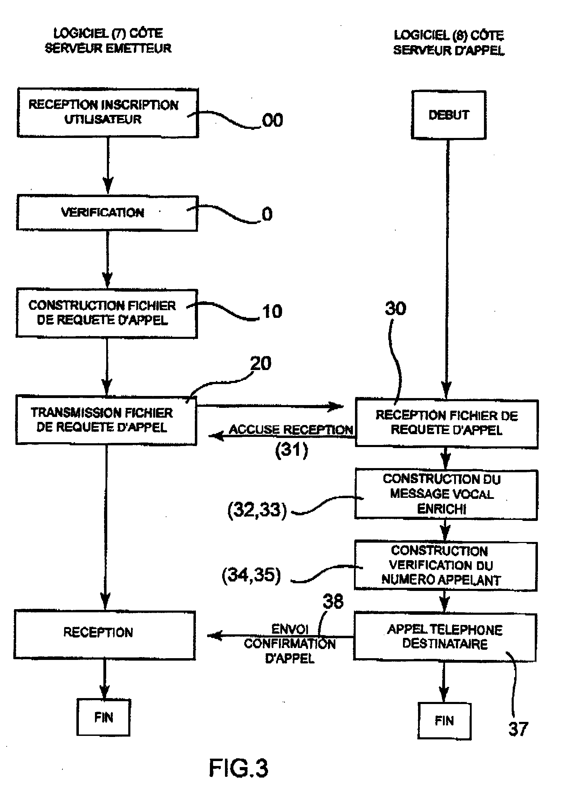

- la figure 3 représente un organigramme des étapes du procédé selon l'invention, telles que mises en oeuvre par les programmes respectifs du serveur du Service Émetteur et du Serveur d'Appels.

Les exemples suivants permettront de mieux illustrer le procédé selon l'invention. Ces exemples ne sont nullement limitatifs et utilisent tous le même principe sous-jacent, à savoir l'incorporation dans le message vocal d'instructions d'interprétation ou d'utilisation d'une Information Complémentaire non vocale rémanente contenue dans le numéro d'un appel entrant.

### Exemple 1 : utilisation du procédé selon l'invention pour l'accès à un site physique, par exemple une chambre d'hôtel avec un numéro de chambre et un code d'accès.

Il existe de nos jours des hôtels en libre service c'est-à-dire sans réception. Généralement les clients louent leur chambre par internet sur le site de l'hôtel et règlent le prix de leur chambre en ligne à l'aide de leur carte de débit ou de crédit. La carte qui été utilisée pour le règlement sert alors de carte d'accès à l'hôtel. Le client à son arrivée à l'hôtel insère sa carte dans un lecteur et se voit attribuer un numéro de chambre et un code d'accès. Or le paiement en ligne avec une carte virtuelle (à usage unique) rend cette procédure impossible. Le procédé selon l'invention apporte une solution simple et peu coûteuse à ce problème, comme cela apparaît ci-dessous.

Étape 0 : Le site internet de l'hôtel (le Service Émetteur) vient d'enregistrer un achat de nuitée d'un client (le Destinataire), il détecte que le paiement a été réalisé avec une carte virtuelle. Le Service Emetteur demande alors au client de saisir sur son Terminal Réseau son numéro de téléphone mobile afin de pouvoir lui communiquer les modalités d'accès à l'hôtel. Le système du Service Émetteur détermine le numéro de la chambre attribuée à ce client ainsi qu'un code d'accès. Il faudra par conséquent communiquer ce numéro et ce code d'accès au client via son téléphone.
Étape 1 : Le système du Service Émetteur construit un fichier de requête contenant sous forme numérique les éléments suivants :
   - une annonce musicale d'accueil encore appelée « jingle », délivrée sous forme d'un fichier audio ;
   - le nom du Destinataire (*M. Dupond*) ;
   - un texte à énoncer dans le message audio (par exemple du type : « *Bonjour Monsieur Dupond, nous vous remercions de votre commande d'une nuitée à notre hôtel, votre numéro de chambre est constitué par les 3 derniers chiffres du numéro appelant et votre code d*'*accès est lui constitué par les 4 chiffres précédents votre numéro de chambre ; nous vous souhaitons un excellent séjour »);*
   - éventuellement le type de voix à utiliser (par exemple une *voix féminine*) lors de la restitution du message audio ;
   - le numéro de téléphone du Destinataire ;
   - une date et heure limite d'envoi du Message Vocal Enrichi
   - l'Information Complémentaire qui devra être communiquée en même temps que le message audio et constituée dans l'exemple choisi, d'un code d'accès à 4 chiffres (par exemple *9876*), et d'un numéro de chambre à 3 chiffres (par exemple *231*) qui devront être présentés séquentiellement.
Étape 2 : Le système du Service Émetteur envoie ce fichier de requête au Serveur d'Appels avec une requête d'envoi, avant la date et l'heure limite indiquées, d'un Message Audio Enrichi vers le Destinataire en utilisant les éléments contenus dans le fichier joint à la requête.
Étape 3 : A réception de cette requête le Serveur d'Appels va exécuter les opérations suivantes :
   1- Il accuse réception du fichier de requête au Service Émetteur
   2- Il construit le message audio destiné à l'Utilisateur, en créant la version vocale du texte contenu dans le fichier de requête à l'aide d'un programme de synthèse vocale tout en utilisant le type de voix requis, à savoir une voix féminine dans l'exemple choisi.
   3- Il prélève à partir du fichier de requête l'Information Complémentaire (par exemple *9876231*) et construit un Numéro Appelant contenant cette Information Complémentaire. Ce Numéro Appelant est alors du type (en France) : *+3399* **9876 231.** On voit que les chiffres en gras correspondant à l'Information Complémentaire sont concaténés avec d'autres chiffres choisis par le Serveur d'Appels pour constituer le Numéro Appelant.
   4- Il vérifie que le Numéro Appelant ainsi constitué n'est pas un numéro de téléphone déjà attribué à un tiers. Pour cela au moins deux modes de vérification sont possibles, séparément ou ensemble : soit la consultation du plan de numérotation publié par l'autorité de régulation des télécommunications du pays, soit le déclenchement d'un appel vers le Numéro Appelant. Dans le cas où celui-ci est déjà attribué à un tiers, l'appel de vérification provoquera une sonnerie, et dans le cas contraire un signal indiquera que le numéro n'est pas attribué. Si le numéro est déjà attribué, le Serveur d'Appels réitère cette opération et modifie le Numéro Appelant, sans modifier l'Information Complémentaire, jusqu'à obtenir confirmation que le Numéro Appelant n'est pas attribué à un tiers.
   5- Une fois cette vérification du Numéro Appelant finie, le Serveur d'Appels déclenche un appel vers le numéro de téléphone du Destinataire (ce numéro est contenu dans le fichier de requête), en remplaçant le numéro de la ligne appelante par le Numéro Appelant de manière à provoquer l'affichage du Numéro Appelant tel que finalisé en étape 4, sur l'écran du Téléphone du Destinataire.
   6- Le Destinataire recevra alors sur son téléphone un appel provenant du Numéro Appelant (ici *+3399 9876 231),* et en décrochant il pourra entendre un Message Vocal Enrichi, dont la partie vocale lui indiquera la nature et l'utilisation de l'Information Complémentaire insérée dans le Numéro Appelant. Par exemple, le message audio suivant : "jingle - *Bonjour Monsieur Dupond, nous vous remercions de votre commande d'une nuitée à notre hôtel, votre numéro de chambre est constitué par les 3 derniers chiffres du numéro appelant et votre code d'accès est lui constitué par les 4 chiffres précédant votre numéro de chambre; nous vous souhaitons un excellent séjour".* On voit bien qu'ainsi est communiquée au Destinataire une Information Complémentaire relative aux codes d'accès de sa chambre qui est insérée dans le Numéro Appelant, et la signification et l'usage de cette Information Complémentaire lui sont dévoilés par l'intermédiaire du message vocal.
Étape 7 : Après la réalisation de l'appel, le Serveur d'Appels envoie au Service Emetteur une confirmation que l'appel correspondant à la requête a bien été réalisé vers le Destinataire, ainsi que la date et l'heure de réalisation.

Après cet appel entrant, le Destinataire dispose dans sa liste des appels reçus, du Numéro Appelant dont il sait que celui-ci contient les éléments (l'Information Complémentaire) qui pourront lui permettre d'accéder à sa chambre le moment venu. Par ailleurs il est le seul à savoir que le Numéro Appelant contient des informations essentielles pour lui, ce qui augmente considérablement la sécurité.

On remarque ici évidemment que l'Information Complémentaire contenue dans le Numéro Appelant est confidentielle. En effet toute personne étrangère au Destinataire réussissant à consulter sa liste des appels entrants ne pourrait en aucun cas deviner que l'un de ces numéros contient le numéro de la chambre et le code d'accès à l'hôtel où la nuitée a été achetée.

Selon une variante de réalisation, le Service Emetteur peut spécifier dans son fichier de requête que le numéro appelant commence toujours pars les mêmes caractères par exemple ici par +33099, afin que les Destinataires reconnaissent facilement le Numéro Appelant et/ou l'émetteur de l'appel ; ainsi dans l'exemple ci-dessus le Numéro Appelant deviendrait *+33099 9876 231.*

Le Destinataire lui, n'aura pas à mémoriser ni le numéro de chambre ni le code d'accès, il lui suffira le moment venu de prendre son téléphone pour consulter sa liste d'appels reçus, sélectionner le Numéro Appelant, et en déduire les éléments qui lui permettront d'accéder à sa chambre et les utiliser.

Dans ce premier exemple d'utilisation du procédé selon l'invention, on remarque qu'une fois reçu le Message Vocal Enrichi, le Destinataire n'a plus d'interaction avec le Service Émetteur. Un autre exemple d'utilisation va illustrer un cas d'utilisation où le Destinataire va utiliser l'Information Complémentaire pour interagir avec le Service Émetteur et son système.

### Exemple 2 : utilisation du procédé selon l'invention pour la réalisation sécurisée d'une transaction de commerce en ligne

Le fort développement du commerce en ligne a suscité un développement aussi important des fraudes et tentatives de fraudes par des gens malveillants qui utilisent une grande variété de techniques pour parvenir à leurs fins : programmes espions, enregistreurs de frappe ("keyloggers"), chevaux de Troie, hameçonnage (« phishing »), attaque dite de l'homme du milieu ("man in the middle"). Parmi les attaques les plus récentes, notons celle dite de l'homme dans le navigateur ("man in the browser"), où un logiciel malveillant a réussi à se greffer dans le navigateur internet d'un utilisateur et à modifier à son profit des transactions financières que ce dernier réalise.

Comme cela va être décrit plus en détail ci-dessous, on peut parfaitement utiliser le procédé selon l'invention pour permettre à un utilisateur de vérifier et valider la transaction de commerce en ligne qu'il est en train de faire afin de contrer les fraudes mentionnées.

On suppose qu'un utilisateur réalise un achat en ligne sur un site marchand, par exemple le site d'adresse Url : www.merchant.fr. Au moment de payer le montant de son achat d'une valeur de 79,88 €, il choisit le débit de son compte bancaire car le site Merchant.fr a conclu un accord avec sa banque permettant cette opération. A ce moment une fenêtre du site bancaire s'ouvre et indique à l'utilisateur qu'il va recevoir un appel sur son Téléphone, et le site bancaire lui demande de suivre les instructions données par cet appel.

Les étapes du procédé selon l'invention dans le cadre de cet exemple de transaction sont listées ci-après :
Étape 0 : le site de la banque (Service Émetteur) de l'utilisateur (le Destinataire) reçoit une demande de paiement du site marchand "merchant.fr", le paiement devant être effectué par le débit du compte bancaire du Destinataire pour un montant de 79,88 €.
Étape 1 : le système du Service Émetteur (la banque) construit un fichier de requête contenant les éléments suivants :
   - le nom du Destinataire (*M. Dupond*), un texte à énoncer dans le message vocal prévu pour l'utilisateur (par exemple : « *Bonjour Monsieur Dupond, le site **merchant.fr** nous demande de le payer par le débit de votre compte pour un montant indiqué en Centimes d'Euro par les 6 derniers chiffres du Numéro Appelant. Si cela correspond effectivement à la transaction que vous voulez réaliser, utilisez comme code de validation les 4 chiffres précédant le montant de la transaction et saisissez-les à l'endroit prévu dans notre fenêtre ; si non saisissez 4 fois zéro. »),*
   - le type de voix à utiliser (par exemple une *voix masculine)*
   - le numéro de téléphone du Destinataire,
   - une instruction d'envoi immédiat,
   - l'Information Complémentaire qui devra être communiquée en même temps que le message vocal et constituée de : un code de validation à 4 chiffres (par exemple *2453*), et le montant de la transaction à 6 chiffres (*007988*), qui devront être présentés séquentiellement.
Étape 2 : Le système du Service Émetteur envoie ce fichier de requête au Serveur d'Appels avec une requête d'envoi immédiat d'un Message Vocal Enrichi vers le Destinataire en utilisant les éléments contenus dans le fichier de requête.
Étape 3 : A réception de cette requête le Serveur d'Appels va exécuter les opérations suivantes :
   1- Il accuse réception de la requête au Service Émetteur,
   2- Il construit le message vocal en créant la version vocale du texte contenu dans le fichier de requête à l'aide d'un programme de synthèse vocale tout en utilisant le type de voix requis à savoir une voix masculine dans l'exemple choisi,
   3- Il assemble l'Information Complémentaire (*2453007988*) et construit un Numéro Appelant contenant cette Information Complémentaire, à savoir un numéro de type : *+3300* **2453 007988** dans l'exemple choisi.
   4- Il vérifie que le Numéro Appelant ainsi constitué n'est pas un numéro de téléphone déjà attribué à un tiers de la même manière que cela a été décrit dans l'exemple 1 précédent.
   5- Une fois cette vérification finie, le Serveur d'Appels déclenche un appel vers le numéro de téléphone du Destinataire (contenu dans le fichier de requête) et substitue au numéro de ligne appelante le Numéro Appelant tel que finalisé en 4 afin que celui-ci s'affiche sur le Téléphone du Destinataire.
   6- Le Destinataire reçoit alors un appel provenant du Numéro Appelant (ici *+3300Z453007988*), et en décrochant il pourra entendre le message vocal suivant énoncé par le Serveur d'Appels : " *Bonjour Monsieur Dupond, le site merchant.fr nous demande de le payer par le débit de votre compte d'un montant indiqué en Centimes d'Euro par les 6 derniers chiffres du Numéro Appelant. Si cela correspond effectivement à la transaction que vous voulez réaliser, utilisez comme code de validation les 4 chiffres précédents le montant de la transaction et saisissez-les à l'endroit prévu dans notre fenêtre; si non saisissez 4 fois zéro".*
Étape 4 : Après la réalisation de l'appel, le Serveur d'Appels envoie au système du Service Emetteur une confirmation que l'appel correspondant à la requête a bien été réalisé vers le destinataire, avec l'indication de la date et l'heure de réalisation.
Étape 5 : le Destinataire, après avoir écouté le message reçu, constate que la transaction mentionnée dans le message est bien celle qu'il veut réaliser, examine le Numéro Appelant et saisit le code contenu dans ce dernier, à savoir 2453, sur la fenêtre du site bancaire, au moyen de son Terminal Réseau. Dans ce cas la validation de la transaction est faite, le processus d'achat en ligne peut se terminer.

En définitive, à travers cet exemple on voit bien qu'il est possible d'utiliser le procédé selon l'invention pour la validation d'une transaction en ligne. Il faut simplement que l'Information Complémentaire contienne au moins une information représentative de ladite transaction en ligne (par exemple son montant, ou son destinataire), et un code de validation de la transaction.

Dans le cas où le destinataire aurait été confronté à une attaque de type homme dans le navigateur ("man in the browser"), il est vraisemblable que la banque aurait reçu une demande de transaction, modifiée par le programme malveillant à l'insu du Destinataire, au profit d'un autre bénéficiaire que le site merchant.fr, et avec un montant probablement lui aussi différent. Dans ce cas le message reçu n'aurait pas indiqué ni merchant.fr ni le bon montant de la transaction. Cette information de validation de la transaction étant véhiculée par un canal totalement différent du canal internet, à savoir par l'intermédiaire d'un Message Vocal Enrichi transmis par un Serveur d'Appels, cette information de validation n'est ni accessible ni interceptable par le navigateur internet et donc par le programme malveillant. Elle ne peut donc en aucun cas être modifiée par le programme malveillant greffé dans le navigateur et à l'insu des acteurs en présence. Le Destinataire peut alors simplement récuser la transaction frauduleuse en saisissant le code 0000.

### Description générique du procédé selon l'invention

Au-delà des deux exemples applicatifs spécifiques décrits ci-dessus, on s'aperçoit que le procédé selon l'invention peut être généralisé comme suit.

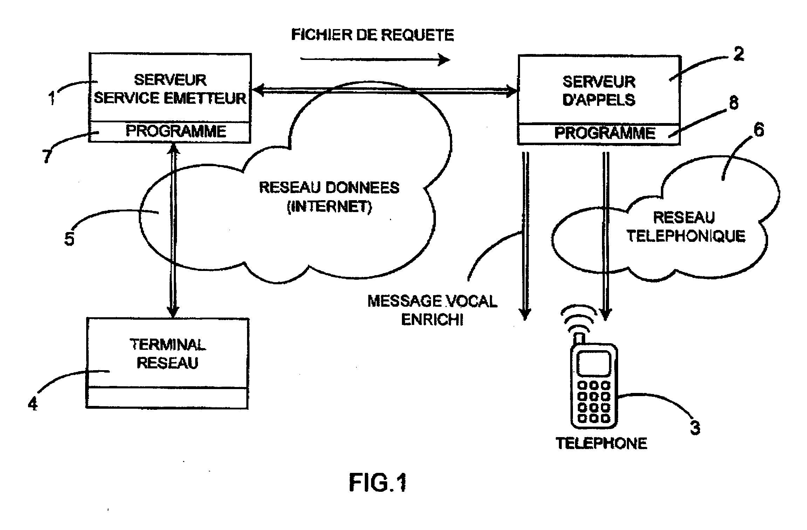

Le procédé selon l'invention implique les acteurs ou entités physiques suivants, tels que représentés en Figure 1 :
- un Service Émetteur, qui dispose de moyens informatiques par exemple sous la forme d'un serveur 1 et de connexions numériques à des réseaux numériques (Internet, ou autres), éventuellement d'un service en ligne accessible depuis Internet.
- Un Serveur d'Appels 2 qui peut être hébergé et opéré par un tiers ou directement par le Service Émetteur.
- Un Destinataire qui dispose d'un Téléphone 3 et qui peut dans certains cas utiliser un Terminal Réseau 4 pour se connecter au service en ligne du Service Émetteur.

Le serveur 1 du Service Emetteur, le Serveur d'Appels 2 et le Terminal Réseau peuvent communiquer par l'intermédiaire d'un réseau de données 5, par exemple le réseau internet, alors que le Serveur d'Appels 2 est capable d'appeler le Téléphone 3 du Destinataire au moyen du réseau téléphonique 6.

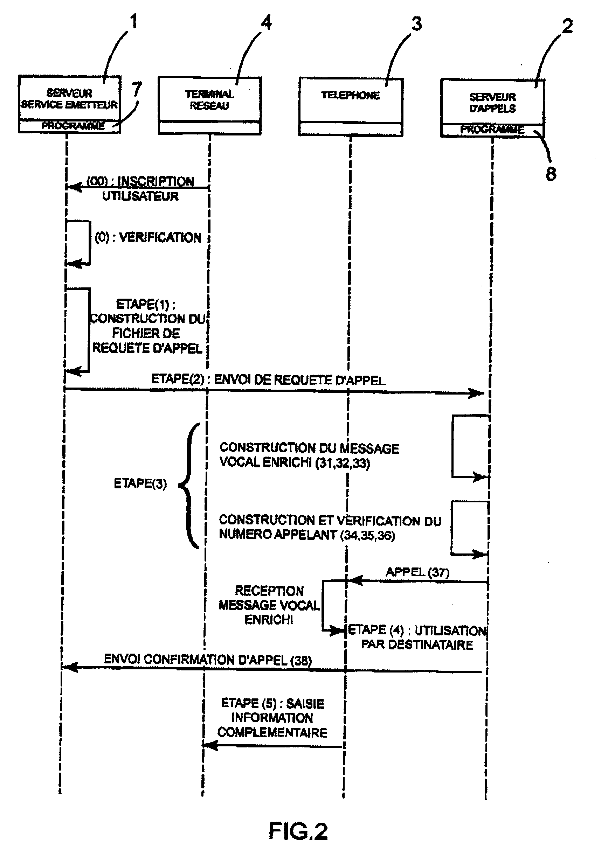

Le procédé selon l'invention comporte différentes étapes décrites en relation avec la Figure 2. Ces différentes étapes vont permettre au Service Émetteur d'envoyer, via le Serveur d'Appels 2, un Message Vocal Enrichi au Destinataire. Le Destinataire est une personne connue du Service Émetteur ou qui vient de se faire connaitre auprès de lui dans un processus classique d'inscription (étape (00) de la Figure 2) précédant l'envoi d'un Message Vocal Enrichi et au cours duquel il aura notamment communiqué au Service Émetteur son numéro de Téléphone.
Étape 0 : le système du Service Émetteur vérifie qu'il dispose des éléments nécessaires pour constituer et demander l'envoi au Destinataire, d'un Message Vocal Enrichi (numéro de téléphone du Destinataire, éléments de contenu du message, etc.).
Étape 1 : le système du Service Émetteur construit (à savoir le serveur 1 du Service Emetteur sur lequel tourne un programme 7 spécifique), un fichier de requête contenant un ensemble d'éléments numérisés tels que :
   - Un ou plusieurs fichiers audio (A1, ... An) pouvant être constitués de sons, musique ou autres;
   - Un ou plusieurs fichiers texte (T1, ..., Tm). Ces fichiers contiennent des informations généralement personnalisées liés au Destinataire, (nom, événement justifiant l'envoi du Message Vocal Enrichi, signification de l'Information Complémentaire, instructions, etc.). Ces fichiers texte sont destinés à être convertis en message vocal à l'aide d'un programme de synthèse vocale par le Serveur d'Appels, puis à être intégrés dans le Message Vocal Enrichi. C'est en écoutant la version vocale synthétisée à partir de ces fichiers que le Destinataire pourra découvrir la composition et la signification de l'Information Complémentaire contenue dans le Numéro Appelant et qu'il saura comment l'utiliser. Dans un autre mode de réalisation, le contenu du message vocal peut être communiqué directement sous forme de fichier audio au lieu d'un fichier texte, ce qui peut être pertinent notamment quand le contenu du message vocal est souvent ou toujours le même, ceci évitant de faire une synthèse vocale à chaque émission;
   - Un type de voix (V1, V2, ... Vn) à utiliser par le programme de synthèse vocale pour convertir les fichiers texte en message vocal;
   - Une instruction de séquencement qui définit l'ordre dans lequel les éléments audio du message vocal doivent être assemblés (par exemple : A1, T1, T2, T3, A2). Il est à noter que dans le cas particulier où la signification de l'Information Complémentaire est indiquée intégralement par un autre moyen que le message vocal, alors les messages audio et texte (Ai, Ti) peuvent être vides ou ne pas figurer du tout dans le fichier de requête envoyé par le Service Émetteur au Serveur d'Appels. Dans ce cas le message vocal est alors vide.
   - Le numéro de téléphone du Destinataire ;
   - Une instruction d'envoi comprenant des paramètres d'envoi du Message Vocal Enrichi : date et heure d'envoi (ou envoi immédiat), le nombre de sonneries, le nombre d'essais en cas de non décrochage du Téléphone du Destinataire, l'intervalle entre chaque essai;
   - l'Information Complémentaire constituée d'une chaîne caractères alphanumériques ou numériques, mais le plus souvent numériques, de longueur limitée (par exemple : 078915566) en précisant la position qu'elle devra occuper dans le Numéro Appelant (par exemple : fin du numéro). La longueur maximale de cette chaîne de caractères est une donnée fournie préalablement par le Serveur d'Appels au Service Émetteur, elle dépendra notamment des réseaux de téléphonie utilisés par ce dernier.
   - Optionnellement un préfixe, constitué de quelques caractères (par exemple : 999), destiné à apparaître en tête du Numéro Appelant afin de permettre au Destinataire de reconnaître aisément que l'appel véhiculant le Message Vocal Enrichi provient du Service Émetteur ;
Étape 2 : Le système du Service Émetteur envoie ce fichier de requête au Serveur d'Appels afin que ce dernier procède à la construction du Message Vocal Enrichi correspondant au fichier de requête, et à son envoi au Destinataire.
Étape 3 : A réception (30) de ce fichier de requête le Serveur d'Appels 2 lance son programme 8 de traitement de requêtes qui va construire en 31 un Message Vocal Enrichi, à partir des informations reçues dans le fichier de requête. Pour cela, le Serveur d'Appels pourvu de son programme 8 spécifique va exécuter les opérations suivantes :
   31. Il accuse réception du fichier de requête au Service Émetteur;
   32. Il convertit les fichiers texte du fichier de requête en fichiers audio, à l'aide d'un programme de synthèse vocale et en utilisant le type de voix indiqué dans le fichier de requête dans la mesure où ces fichiers ne sont pas vides.
   33. Puis il assemble dans l'ordre spécifié dans le fichier de requête les différents éléments audio (à savoir la synthèse vocale des fichiers texte, et les fichiers audio non vocaux) qui vont constituer la partie audio du message (par exemple : A1, T1, T2, T3, A2); Dans le cas particulier où les fichiers Ai et Ti sont vides ou inexistants dans la requête, alors le message vocal est vide.
   34. Il assemble le code pays (par exemple 33), l'Information Complémentaire dans la position spécifiée dans le fichier de requête, et un préfixe éventuel pour construire le Numéro Appelant (par exemple : 33999078915566) correspondant au Message Vocal Enrichi spécifié;
   35. Il vérifie la disponibilité du Numéro Appelant, à savoir le fait que le Numéro Appelant ainsi constitué n'est pas un numéro de téléphone déjà attribué ou n'est pas attribué à un tiers autre que le Service Émetteur. Pour cela au moins deux modes de vérification sont possibles : soit la consultation du plan de numérotation publié par l'autorité de régulation des télécommunications du pays, soit le déclenchement d'un appel vers le Numéro Appelant constitué ci-dessus. Dans le cas où celui-ci est attribué, l'appel provoquera une sonnerie, dans le cas contraire un signal indiquera que le numéro n'est pas attribué. Si le numéro est déjà attribué, le Serveur d'Appels modifie le Numéro Appelant, en rajoutant ou supprimant des caractères, sans altérer l'Information Complémentaire et sa position, et réitère cette opération de vérification, jusqu'à obtenir confirmation que le Numéro Appelant n'est pas attribué à un tiers.
   36. Une fois cette vérification finie, le Serveur d'Appels détermine, en analysant le numéro de téléphone du Destinataire (contenu dans le fichier de requête), à quel opérateur celui-ci est abonné et présélectionne une ligne (parmi les lignes téléphoniques dont il dispose pour émettre ses appels) qui soit du même opérateur et à partir de laquelle il va pouvoir émettre son appel. Ce choix n'est pas indispensable mais avantageux pour réduire le coût de l'appel qui va être émis vers le Destinataire;
   37. le Serveur d'Appels déclenche un appel vers le numéro de téléphone du Destinataire depuis la ligne présélectionnée dans la phase précédente et substitue au numéro de cette ligne le Numéro Appelant constitué en phase 34, ce qui aura pour effet de provoquer l'affichage du Numéro Appelant (par exemple ici : +33999078915566) sur le Téléphone du Destinataire.
      Le Destinataire reçoit alors un appel provenant du Numéro Appelant (ici, +33999078915566). Dans le cas où le Destinataire ne décroche pas l'appel, le Serveur d'Appels réitère l'appel le nombre de fois indiqué et aux intervalles indiqués dans le fichier de requête envoyé par le Service Émetteur.
   38. Après la réalisation de l'appel, le Serveur d'Appels 2 envoie au système du Service Émetteur 1 une confirmation que l'appel vers le Destinataire correspondant à la requête a bien été réalisé et que le décroché a bien été obtenu, avec la date et l'heure de réalisation. Dans le cas où aucun décroché n'a été obtenu après le nombre d'essais spécifiés, le Serveur d'Appels envoie le compte rendu des appels émis non décrochés avec leur date et heure de réalisation.
Étape 4 : En décrochant l'appel, ou en consultant sa messagerie vocale si l'appel a été orienté vers celle-ci, le Destinataire prend connaissance du message vocal constitué par les éléments créés et assemblés en phases 32 et 33 de l'étape 3 (par exemple ici la version audio de : A1, T1, T2, T3, A2). C'est en écoutant le message vocal qu'il découvre que le Numéro Appelant contient une information pertinente pour lui : l'Information Complémentaire, et que le message vocal lui indique la signification de cette Information Complémentaire et éventuellement comment et où utiliser toute ou partie de cette information. Après écoute du Message vocal le Destinataire conserve le Numéro Appelant dans sa liste des appels reçus sur son Téléphone pour un usage ultérieur éventuel.
   Le processus peut s'interrompre à cette étape de réception d'appel si le Destinataire n'a pas besoin d'utiliser toute ou partie de l'Information Complémentaire, ce qui est le cas lorsque le Message Vocal Enrichi est utilisé simplement pour communiquer une information. Le processus peut aussi continuer de manière interactive avec le Destinataire, dans le cas où ce dernier devra utiliser toute ou partie de l'Information Complémentaire pour terminer un processus ou une transaction qu'il aurait entamé par ailleurs.
Étape 5 : Dans ce dernier cas, le moment venu le Destinataire consulte sa liste d'appels, examine le Numéro Appelant, extrait le ou les éléments contenus dans l'Information Complémentaire ainsi que cela lui a été indiqué dans le message vocal et utilise ces éléments comme indiqué dans le message vocal (par exemple cela peut être l'extraction d'un code et son utilisation pour l'ouverture d'une porte (comme décrit dans l'Exemple 1), ou la saisie sur son Terminal Réseau d'un code extrait de l'Information Complémentaire, pour transmission au serveur 1 du Service Emetteur (comme décrit dans l'Exemple 2).

Dans une variante de mise en oeuvre du procédé selon l'invention, il peut être avantageux de dévoiler la constitution, la signification et l'utilisation de l'Information Complémentaire non pas uniquement au travers du message vocal communiqué par le Serveur d'Appels, mais partiellement par le message vocal et partiellement par un autre moyen. Ceci peut par exemple être utile quand l'Information Complémentaire contient à la fois une donnée peu sensible et une donnée confidentielle. A titre d'exemple, on peut signaler un cas où l'Information Complémentaire vaudrait 078915566 où 07891 représenterait une information non sensible, à savoir le montant d'une transaction de 78,91€, et où 5566 représenterait une information sensible, à savoir le code pour valider cette transaction. Dans ce cas il peut être avantageux d'indiquer d'une part sur le site du service en ligne où va être validée la transaction, que le montant à valider est contenu dans les 5 chiffres du Numéro Appelant précédant les 4 derniers chiffres, et d'indiquer d'autre part uniquement dans le message vocal que le code de validation de la transaction est constitué des 4 derniers chiffres du Numéro Appelant.

Dans une autre variante de réalisation du procédé selon l'invention, et avec la même logique, il peut être avantageux dans certains cas de communiquer la constitution, la signification et l'utilisation de l'Information Complémentaire simultanément dans le message vocal et par un autre moyen, comme l'affichage sur le site en ligne du Service Émetteur ou autre.

Dans une variante de réalisation supplémentaire du procédé selon l'invention, il peut être avantageux dans certains cas de communiquer la constitution, la signification et l'utilisation de l'Information Complémentaire intégralement par un autre moyen que le message vocal, comme l'affichage sur le site en ligne du Service Émetteur ou autre.

Dans ce cas particulier il peut être avantageux que le message vocal soit vide.

### AVANTAGES DE L'INVENTION

Le procédé selon l'invention permet de répondre aux buts fixés, et comporte plusieurs avantages décisifs par rapport à l'Etat de la Technique.

L'usage du procédé selon l'invention permet notamment que le Destinataire dispose alors d'une information potentiellement confidentielle et rémanente, qui lui parvient par la combinaison d'un message vocal transmis par le Serveur d'Appels, et d'une Information Complémentaire intégrée au Numéro Appelant, le message vocal indiquant comment interpréter et utiliser ladite Information Complémentaire.

L'usage du procédé selon l'invention permet notamment d'envoyer au Destinataire à l'aide d'un seul message vocal une Information Complémentaire qui :
- est rémanente, en ce sens qu'elle persiste après l'écoute du message vocal car elle est contenue dans le Numéro Appelant qui reste affiché dans la liste des appels reçus sur le Téléphone du Destinataire ;
- est confidentielle pour le Destinataire, car elle a une signification et une utilité qui est dévoilée au seul Destinataire intégralement, partiellement ou pas dans le message vocal et un tiers ne peut donc en deviner la signification ;
- n'occasionne pas de surcoût pour sa communication puisqu'elle est véhiculée en même temps que le message vocal.

Il en découle de nombreux autres avantages par rapport à l'état de la technique, avec notamment fait que la transmission de l'Information Complémentaire se fait par un canal différent et totalement indépendant d'une connexion internet sur laquelle le Destinataire effectue une transaction quelconque, par exemple une transaction de commerce électronique.

## Revendications

1. Procédé de création et de transmission d'un appel téléphonique sollicité par un Service Émetteur vers le Téléphone (3) d'un Destinataire, dans lequel un serveur (1) du Service Émetteur est apte à présenter auprès d'un Serveur d'Appels (2) une requête d'appel contenant des informations numériques permettant au Serveur d'Appels de déclencher un appel vers le Téléphone (3) du Destinataire à partir d'un Numéro Appelant destiné à s'afficher sur ledit Téléphone, **caractérisé en ce que** ledit appel contient un Message Vocal Enrichi, constitué d'une part par un message vocal construit par le Serveur d'Appels à partir d'une partie des informations contenues dans ladite requête d'appel et destiné à être diffusé lors dudit appel, et d'autre part par une Information Complémentaire non vocale, contenue dans ladite requête d'appel et utilisée par le Serveur d'Appels pour constituer ledit Numéro Appelant.

2. Procédé selon la revendication 1, **caractérisé en ce que** ladite Information Complémentaire comporte une chaine de caractères alphanumériques ou numériques insérée par le Serveur d'Appels (2) dans ledit Numéro Appelant, et **en ce que** ledit message vocal indique au Destinataire la nature et l'utilisation de ladite Information Complémentaire.

3. Procédé selon la revendication 1 ou la revendication 2, **caractérisé en ce que** la signification de ladite Information Complémentaire est communiquée au Destinataire uniquement au moyen dudit message vocal.

4. Procédé selon la revendication 1 ou la revendication 2, **caractérisé en ce que** la signification de ladite Information Complémentaire est communiquée au Destinataire en partie au moyen dudit message vocal, et en partie par un moyen indépendant du message vocal.

5. Procédé selon la revendication 1 ou la revendication 2, **caractérisé en ce que** la signification de ladite Information Complémentaire est indiquée en totalité par un moyen indépendant du message vocal.

6. Procédé selon la revendication 5, **caractérisé en ce que** la signification de ladite Information Complémentaire est indiquée dans une page web d'un site transactionnel auquel le Destinataire est par ailleurs connecté au moyen d'un Terminal Réseau (4).

7. Procédé selon l'une quelconque des revendications précédentes, **caractérisé en ce que** ladite Information Complémentaire est rémanente dans le Téléphone (3) du Destinataire de façon à pouvoir être consultée par celui-ci à la demande.

8. Procédé selon l'une quelconque des revendications précédentes, **caractérisé en ce que** ladite Information Complémentaire à une validité limitée dans le temps.

9. Procédé selon l'une quelconque des revendications précédentes, **caractérisé en ce que** pour transmettre avec le message vocal une Information Complémentaire, il comporte les étapes suivantes :
- construction par un programme (7) au niveau du serveur (1) du Service Émetteur d'un fichier de requête d'appel indiquant un ensemble de paramètres pour la construction du Message Vocal Enrichi ;
- transmission dudit fichier de requête d'appel audit Serveur d'Appels (2) ;
- à réception dudit fichier par le Serveur d'Appels (2), lancement par celui-ci d'un programme de traitement (8) apte à construire un Numéro Appelant incorporant ladite Information Complémentaire, et à transmettre au Téléphone (3) du Destinataire ledit message vocal en provoquant l'affichage dudit Numéro Appelant sur le Téléphone du Destinataire.

10. Procédé selon la revendication 9, **caractérisé en ce que** ledit fichier de requête comporte au moins le numéro de Téléphone du Destinataire et l'Information Complémentaire destinée au Destinataire.

11. Procédé selon la revendication 10, **caractérisé en ce que** ledit fichier de requête comporte en outre un ou plusieurs des éléments suivants : le texte d'un message vocal destiné au Destinataire sous la forme d'un ou plusieurs fichiers de texte (T1, ... Tm) ou le fichier audio d'un tel message, la signification de l'Information Complémentaire, le nom du Destinataire, un type de voix à utiliser pour la génération du Message Vocal Enrichi à partir du fichier de requête, ce type de voix étant choisi parmi plusieurs types de voix disponibles (V1,..., Vn), une instruction de séquencement définissant l'ordre dans lequel les éléments du fichier de requête doivent être assemblés, une instruction d'envoi définissant les paramètres d'envoi du Message Vocal Enrichi, et une date et heure limite de validité de l'Information Complémentaire incluse dans le Message Vocal Enrichi.

12. Procédé selon la revendication 9, **caractérisé en ce que** ledit programme de traitement (8) comporte une ou plusieurs des étapes consistant à :
- délivrer (31) un accusé de réception du fichier de requête au Service Émetteur;
- convertir (32) les fichiers texte du fichier de requête en fichiers vocaux, à l'aide d'un programme de synthèse vocale et en utilisant le type de voix indiqué dans le fichier de requête ;
- assembler (33) dans l'ordre spécifié dans le fichier de requête les différents éléments audio, à savoir conversion des fichiers texte et fichiers audio, qui vont constituer la partie audio du message ;
- assembler (34) le code pays et l'Information Complémentaire dans la position spécifiée dans le fichier de requête, avec un préfixe éventuel pour construire le Numéro Appelant associé au Message Vocal Enrichi spécifié;
- vérifier (35) la disponibilité du Numéro Appelant, à savoir le fait que le Numéro Appelant ainsi constitué n'est pas un numéro de téléphone déjà attribué ou n'est pas attribué à un tiers autre que le Service Émetteur ;
- déclencher (37) à partir du Serveur d'Appels un appel vers le numéro de téléphone du Destinataire depuis une ligne d'appel, et substituer au numéro de cette ligne le Numéro Appelant, de façon à provoquer l'affichage du Numéro Appelant sur le Téléphone du Destinataire ;
- envoyer (39) par le Serveur d'Appels une confirmation au système du Service Émetteur, indiquant que l'appel vers le Destinataire correspondant à la requête a bien été réalisé et que le décroché a bien été obtenu, avec la date et l'heure de réalisation.

13. Système pour la création et la transmission d'un message vocal à partir du serveur (1) d'un Service Émetteur vers le Téléphone (3) d'un Destinataire via un Serveur d'Appels (2), **caractérisé en ce que** le serveur (1) comporte un programme (7) apte à préparer une requête d'appel contenant un message vocal numérisé et à la transmettre au Serveur d'Appels (2), et **en ce que** le Serveur d'Appels (2) comporte un programme (8) apte à recevoir ladite requête d'appel et à construire à partir de cette requête d'appel un Message Vocal Enrichi comprenant d'une part une synthèse vocale dudit message vocal numérisé, et d'autre part une Information Complémentaire non vocale également contenue dans ladite requête d'appel et apte à être utilisée par le Serveur d'Appels (2) pour constituer un Numéro Appelant destiné à s'afficher sur le Téléphone (3) du Destinataire.

14. Système selon la revendication 13, **caractérisé en ce que** la signification de ladite Information Complémentaire est contenue soit partiellement dans ledit message vocal soit totalement contenue dans ledit message vocal, ou au contraire signifiée en totalité au Destinataire par un autre moyen.

15. Utilisation du procédé selon l'une quelconque des revendications 1 à 12 pour la validation d'une transaction en ligne, **caractérisée en ce que** ladite Information Complémentaire contient au moins une information représentative de ladite transaction en ligne, par exemple montant, destinataire, et/ou un code de validation de ladite transaction en ligne.

## Patentansprüche

1. Verfahren zum Erzeugen und Übertragen eines Telefonanrufs, der durch einen Senderdienst zu dem Telefon (3) eines Adressaten angefordert wird, wobei ein Server (1) des Senderdiensts einem Anruf-Server (2) eine Anrufanforderung präsentieren kann, die digitale Informationen enthält, die dem Anruf-Server ermöglichen, einen Anruf zu dem Telefon (3) des Adressaten anhand einer Anrufernummer, die dazu bestimmt ist, auf dem Telefon angezeigt zu werden, auszulösen, **dadurch gekennzeichnet, dass** der Anruf eine erweiterte Sprachnachricht enthält, die gebildet ist einerseits durch eine Sprachnachricht, die von dem Anruf-Server anhand eines Teils der in der Anrufanforderung enthaltenen Informationen konstruiert ist und dazu bestimmt ist, bei dem Anruf ausgesendet zu werden, und andererseits durch nichtsprachliche komplementäre Informationen, die in der Anrufanforderung enthalten sind und von dem Anruf-Server verwendet werden, um die Anrufernummer zu bilden.

2. Verfahren nach Anspruch 1, **dadurch gekennzeichnet, dass** die komplementären Informationen eine alphanumerische oder digitale Zeichenkette enthalten, die von dem Anruf-Server (2) in die Anrufernummer eingefügt wird, und dass die Sprachnachricht dem Adressaten die Art und die Verwendung der komplementären Informationen angibt.

3. Verfahren nach Anspruch 1 oder Anspruch 2, **dadurch gekennzeichnet, dass** die Bedeutung der komplementären Informationen an den Adressaten ausschließlich durch die Sprachnachricht übermittelt wird.

4. Verfahren nach Anspruch 1 oder Anspruch 2, **dadurch gekennzeichnet, dass** die Bedeutung der komplementären Informationen an den Adressaten zum Teil durch die Sprachnachricht und zum Teil durch ein von der Sprachnachricht unabhängiges Mittel übermittelt werden.

5. Verfahren nach Anspruch 1 oder Anspruch 2, **dadurch gekennzeichnet, dass** die Bedeutung der komplementären Informationen als Ganzes durch ein von der Sprachnachricht unabhängiges Mittel angegeben wird.

6. Verfahren nach Anspruch 5, **dadurch gekennzeichnet, dass** die Bedeutung der komplementären Informationen auf einer Internetseite einer transaktionsorientierten Website angegeben wird, mit der der Adressat außerdem über ein Netzendgerät (4) verbunden ist.

7. Verfahren nach einem der vorhergehenden Ansprüche, **dadurch gekennzeichnet, dass** die komplementären Informationen in dem Telefon (3) des Adressaten permanent vorhanden sind, derart, dass sie von diesem auf Anforderung abgefragt werden können.

8. Verfahren nach einem der vorhergehenden Ansprüche, **dadurch gekennzeichnet, dass** die komplementären Informationen eine zeitlich begrenzte Gültigkeit haben.

9. Verfahren nach einem der vorhergehenden Ansprüche, **dadurch gekennzeichnet, dass** es, um mit der Sprachnachricht komplementäre Informationen zu senden, die folgenden Schritte umfasst:
- Konstruieren durch ein Programm (7) auf Seiten des Servers (1) des Senderdiensts einer Anrufanforderungsdatei, die eine Gesamtheit von Parametern für die Konstruktion der erweiterten Sprachnachricht angibt;
- Übertragen der Anrufanforderungsdatei an den Anruf-Server (2);
- bei Empfang der Datei durch den Anruf-Server (2) Starten durch diesen eines Verarbeitungsprogramms (8), das eine Anrufernummer konstruieren kann, die die komplementären Informationen enthält, und an das Telefon (3) des Adressaten die Sprachnachricht übertragen kann, indem die Anzeige der Anrufernummer auf dem Telefon des Adressaten bewirkt wird.

10. Verfahren nach Anspruch 9, **dadurch gekennzeichnet, dass** die Anforderungsdatei wenigstens die Telefonnummer des Adressaten und die für den Adressaten bestimmten komplementären Informationen enthält.

11. Verfahren nach Anspruch 10, **dadurch gekennzeichnet, dass** die Anforderungsdatei außerdem eines oder mehrere der folgenden Elemente enthält: den Text einer Sprachnachricht, die für den Adressaten bestimmt ist, in Form einer oder mehrerer Textdateien (T1, ... Tm) oder der Audiodatei einer solchen Nachricht, die Bedeutung der komplementären Informationen, den Namen des Adressaten, einen Sprachtyp, der für die Erzeugung der erweiterten Sprachnachricht ausgehend von der Anforderungsdatei verwendet werden soll, wobei dieser Sprachtyp unter mehreren Typen verfügbarer Stimmen (V1, ... Vn) gewählt wird, einen Ablaufbefehl, der die Reihenfolge definiert, in dem die Elemente der Anforderungsdatei zusammengefügt werden müssen, einen Sendebefehl, der die Sendeparameter der erweiterten Sprachnachricht definiert, und ein Datum und eine Uhrzeit der Gültigkeit der komplementären Informationen, die in der erweiterten Sprachnachricht enthalten sind.

12. Verfahren nach Anspruch 9, **dadurch gekennzeichnet, dass** das Verarbeitungsprogramm (8) einen oder mehrere der Schritte umfasst, die darin bestehen:
- eine Bestätigung des Empfangs der Anforderungsdatei an den Senderdienst zu liefern (31);
- die Textdateien der Anforderungsdatei mit Hilfe eines Sprachsyntheseprogramms und unter Verwendung des in der Anforderungsdatei angegebenen Sprachtyps in Sprachdateien umzusetzen (32);
- in der in der Anforderungsdatei spezifizierten Reihenfolge die verschiedenen Audioelemente, nämlich die Umsetzung der Textdateien und Audiodateien, die den Audioteil der Nachricht bilden, zusammenzufügen (33);
- den Landescode und die komplementären Informationen an der in der Anforderungsdatei spezifizierten Position zusammen mit einem eventuellen Präfix zusammenzufügen (34), um die Anrufernummer, die der spezifizierten erweiterten Sprachnachricht zugeordnet ist, zu konstruieren;
- die Verfügbarkeit der Anrufernummer, nämlich die Tatsache, dass die so gebildete Anrufernummer keine bereits vergebene Telefonnummer ist oder nicht an einen von dem Senderdienst verschiedenen Dritten vergeben worden ist, zu verifizieren (35);
- ausgehend von dem Anruferdienst einen Anruf zu der Telefonnummer des Adressaten von einer Anrufleitung auszulösen und die Nummer dieser Leitung durch die Anrufernummer zu ersetzen (37), derart, dass die Anzeige der Anrufernummer auf dem Telefon des Adressaten bewirkt wird;
- durch den Anrufer-Server eine Bestätigung, die angibt, dass der Anruf zu dem Adressaten, der der Anforderung entspricht, erfolgreich verwirklicht worden ist und dass das Abheben erfolgreich erhalten worden ist, an das System des Senderdiensts zusammen mit dem Datum und der Uhrzeit der Verwirklichung zu schicken (39).

13. System für die Erzeugung und die Übertragung einer Sprachnachricht von einem Server (1) eines Senderdiensts zu dem Telefon (3) eines Adressaten über einen Anruf-Server (2), **dadurch gekennzeichnet, dass** der Server (1) ein Programm (7) enthält, das eine Anrufanforderung vorbereiten kann, die eine digitalisierte Sprachnachricht enthält, und sie zu dem Anruf-Server (2) übertragen kann, und dass der Anruf-Server (2) ein Programm (8) enthält, das die Anrufanforderung empfangen kann und anhand dieser Anrufanforderung eine erweiterte Sprachnachricht konstruieren kann, die einerseits eine Sprachsynthese der digitalisierten Sprachnachricht und andererseits nichtsprachliche komplementäre Informationen, die ebenfalls in der Anrufanforderung enthalten ist und von dem Anruf-Server (2) verwendet werden kann, um eine Anrufernummer zu bilden, die dazu bestimmt ist, auf dem Telefon (3) des Adressaten angezeigt zu werden, umfasst.

14. System nach Anspruch 13, **dadurch gekennzeichnet, dass** die Bedeutung der komplementären Informationen entweder teilweise in der Sprachnachricht oder vollständig in der Sprachnachricht enthalten ist oder im Gegensatz dazu dem Adressaten als Ganzes durch ein anderes Mittel präsentiert wird.

15. Verwendung des Verfahrens nach einem der Ansprüche 1 bis 12 für die Validierung einer Online-Transaktion, **dadurch gekennzeichnet, dass** die komplementären Informationen wenigstens Informationen enthalten, die die Online-Transaktion, beispielsweise Geldbetrag oder Adressat, und/oder einen Validierungscode für die Online-Transaktion darstellen.

## Claims

1. Method for creating and transmitting a telephone call invoked by a Sender Service to the Telephone (3) of a Recipient, in which a server (1) of the Sender Service is able to present at a Call Server (2) a call request containing numerical information allowing the Call Server to trigger a call to the Telephone (3) of the Recipient from a Caller Number intended to be displayed on said Telephone, **characterized in that** said call contains an Enhanced Voice Message, constituted on the one hand by a voice message which is constructed by the Call Server on the basis of a part of the information contained in said call request and which is intended to be broadcast during said call, and on the other hand by a non-voice Complementary Item of Information, contained in said call request and used by the Call Server to constitute said Caller Number.

2. Method according to Claim 1, **characterized in that** said Complementary Item of Information comprises a string of alphanumeric or numeric characters inserted by the Call Server (2) into said Caller Number, and **in that** said voice message indicates to the Recipient the nature and the use of said Complementary Item of Information.

3. Method according to Claim 1 or Claim 2, **characterized in that** the meaning of said Complementary Item of Information is communicated to the Recipient solely by means of said voice message.

4. Method according to Claim 1 or Claim 2, **characterized in that** the meaning of said Complementary Item of Information is communicated to the Recipient in part by means of said voice message, and in part by a means independent of the voice message.

5. Method according to Claim 1 or Claim 2, **characterized in that** the meaning of said Complementary Item of Information is indicated in full by a means independent of the voice message.

6. Method according to Claim 5, **characterized in that** the meaning of said Complementary Item of Information is indicated in a Web page of a transactional site to which the Recipient is moreover connected by means of a Network Terminal (4).

7. Method according to any one of the preceding claims, **characterized in that** said Complementary Item of Information is remanent in the Telephone (3) of the Recipient so as to be able to be consulted by the latter on demand.

8. Method according to any one of the preceding claims, **characterized in that** said Complementary Item of Information has a time-limited validity.

9. Method according to any one of the preceding claims, **characterized in that** to transmit a Complementary Item of Information with the voice message, it comprises the following steps:
- construction by a program (7) at the level of the server (1) of the Sender Service of a call request file indicating a set of parameters for the construction of the Enhanced Voice Message;
- transmission of said call request file to said Call Server (2);
- on receipt of said file by the Call Server (2), running by the latter of a processing program (8) able to construct a Caller Number incorporating said Complementary Item of Information, and to transmit said voice message to the Telephone (3) of the Recipient while causing the display of said Caller Number on the Telephone of the Recipient.

10. Method according to Claim 9, **characterized in that** said request file comprises at least the Telephone number of the Recipient and the Complementary Item of Information intended for the Recipient.

11. Method according to Claim 10, **characterized in that** said request file furthermore comprises one or more of the following elements: the text of a voice message intended for the Recipient in the form of one or more text files (T1,... Tm) or the audio file of such a message, the meaning of the Complementary Item of Information, the name of the Recipient, a type of voice to be used for the generation of the Enhanced Voice Message on the basis of the request file, this type of voice being chosen from among several available types of voice (V1,..., Vn), a sequencing instruction defining the order in which the elements of the request file must be assembled, a dispatch instruction defining the dispatch parameters for the Enhanced Voice Message, and a limit-of-validity date and time for the Complementary Item of Information included in the Enhanced Voice Message.

12. Method according to Claim 9, **characterized in that** said processing program (8) comprises one or more of the steps consisting in:
- delivering (31) an acknowledgment of receipt of the request file to the Sender Service;
- converting (32) the text files of the request file into voice files, with the aid of a voice synthesis program and by using the type of voice indicated in the request file;
- assembling (33) in the order specified in the request file the various audio elements, namely conversion of the text files and audio files, which will constitute the audio part of the message;
- assembling (34) the country code and the Complementary Item of Information in the position specified in the request file, with a possible prefix so as to construct the Caller Number associated with the specified Enhanced Voice Message;
- verifying (35) the availability of the Caller Number, namely the fact that the Caller Number thus constituted is not an already allocated telephone number or is not allocated to a third party other than the Sender Service;
- triggering (37) on the basis of the Call Server a call to the telephone number of the Recipient from a call line, and substituting the Caller Number for the number of this line, so as to cause the display of the Caller Number on the Telephone of the Recipient;
- dispatching (39) by the Call Server a confirmation to the system of the Sender Service, indicating that the call to the Recipient corresponding to the request has indeed been made and that pickup has indeed been obtained, with the date and time it was made.

13. System for the creation and the transmission of a voice message on the basis of the server (1) of a Sender Service to the Telephone (3) of a Recipient via a Call Server (2), **characterized in that** the server (1) comprises a program (7) able to prepare a call request containing a digitized voice message and to transmit it to the Call Server (2), and **in that** the Call Server (2) comprises a program (8) able to receive said call request and to construct on the basis of this call request an Enhanced Voice Message comprising on the one hand a voice synthesis of said digitized voice message, and on the other hand a non-voice Complementary Item of Information also contained in said call request and able to be used by the Call Server (2) to constitute a Caller Number intended to be displayed on the Telephone (3) of the Recipient.

14. System according to Claim 13, **characterized in that** the meaning of said Complementary Item of Information is contained either partially in said voice message or fully contained in said voice message, or conversely signified in full to the Recipient by another means.

15. Use of the method according to any one of Claims 1 to 12 for the validation of an on-line transaction, **characterized in that** said Complementary Item of Information contains at least one item of information representative of said on-line transaction, for example amount, recipient, and/or a validation code for said on-line transaction.
